# EUROPÄISCHE PATENTANMELDUNG

(11) **EP 4 484 041 A1**
(43) Veröffentlichungstag der Anmeldung: **01.01.2025**
(21) Anmeldenummer: 23181948.3
(22) Anmeldetag: 28.06.2023
(51) Int. Cl.: B23D 59/00, B23Q 11/00, B24B 55/10, B28D 7/02

(54) **SPANAUFFANGVORRICHTUNG**

(71) Anmelder: Mafell AG, 78727 Oberndorf a.N. (DE)
(72) Erfinder: LINK, Bernd, 72175 Dornhan (DE); HILS, Arne, 72469 Meßstetten (DE)
(74) Vertreter: Manitz Finsterwald Patent- und Rechtsanwaltspartnerschaft mbB

(57) **Zusammenfassung**

Die Erfindung betrifft eine Spanauffangvorrichtung (1) für Elektrowerkzeuge (2), insbesondere für handgeführte und/oder semistationäre und/oder stationäre Elektrowerkzeuge, mit einem Auffangbehältnis (3) und einer damit verbundenen Kopplungsvorrichtung (4) zur lösbaren Kopplung mit einem Spanaustritt (5) eines Elektrowerkzeugs (2), wobei das Auffangbehältnis (3) eine thermische Isolierung (10) aufweist, durch die zumindest abschnittsweise das Innere (6) des Auffangbehältnisses (3) von dessen Außenseite (7) thermisch getrennt ist.

## Beschreibung

Die Erfindung betrifft eine Spanauffangvorrichtung für Elektrowerkzeuge, die einen Spanaustritt zum Abführen von Spänen aufweisen.

Die Elektrowerkzeuge können insbesondere handgeführte, aber auch stationäre oder sogenannte semi- beziehungsweise halbstationäre Maschinen mit elektrischem Antrieb sein. Semistationäre Elektrowerkzeuge sind insbesondere während der Benutzung stationär, aber einfach zu transportieren und somit für einen mobilen Einsatz konzipiert, wie beispielsweise sogenannte Tischkreissägen oder Unterflurzugsägen, die mit einem zusammenklappbaren Untergestell ausgestattet sein können.

Wenn Elektrowerkzeuge wie beispielsweise Kreissägen insbesondere bei der mechanischen Zerspanung von Metallen eingesetzt werden, wird die entstehende Zerspanungswärme zu einem relevanten Anteil über die Späne abtransportiert. Die oft sehr heißen, Temperaturen von 200 °C und mehr erreichenden Späne können mittels an den Spanaustritt der jeweiligen Maschine koppelbarer Auffangbehältnisse aufgefangen werden.

Nachteilig ist bei einigen herkömmlichen Spanauffangvorrichtungen, dass sie sich durch die heißen Späne so sehr erwärmen können, dass für einen Benutzer Verbrennungsgefahr besteht, so dass für eine weitere Handhabung, insbesondere zum Entleeren, erst eine Abkühlzeit abgewartet werden oder der Benutzer sich auf andere Weise behelfen, z.B. Handschuhe tragen muss. Problematisch sind bereits Oberflächentemperaturen ab etwa 50°C. Andere bekannte Vorrichtungen umfassen Fangbeutel oder -säcke mit z. B. käfigartigen Metallein-sätzen. Auch wurde versucht, die Späne mittels Magneten einzufangen. Die bekannten Lösungen sind jedoch entweder nicht dauerhaft beständig oder unverhältnismäßig teuer.

Aufgabe der Erfindung ist es, die oben genannten Nachteile zu vermeiden.

Die Lösung der Aufgabe erfolgt durch die Merkmale der unabhängigen Ansprüche.

Eine erfindungsgemäße Spanauffangvorrichtung umfasst ein Auffangbehältnis und eine damit verbundene Kopplungsvorrichtung zur lösbaren Kopplung mit einem Spanaustritt eines Elektrowerkzeugs, wobei das Auffangbehältnis eine thermische Isolierung aufweist, durch die zumindest abschnittsweise das Innere des Auffangbehältnisses von dessen Außenseite thermisch getrennt ist.

Durch die thermische Isolierung erwärmt sich die Außenseite des Auffangbehältnisses zumindest abschnittsweise nur wenig, obwohl die Temperatur in dessen Inneren durch aufgefangene heiße Späne auf beispielsweise bis zu 200 °C oder mehr ansteigen kann.

Dadurch kann das Auffangbehältnis der erfindungsgemäßen Spanauffangvorrichtung mit ungeschützter Haut berührt werden, ohne dass die Haut Verbrennungen erleidet. Für das Entleeren heißer Späne aus dem Auffangbehältnis werden somit beispielsweise keine Handschuhe mit ausreichender thermischer Isolierung benötigt. Auch ist keine Wartezeit in Kauf zu nehmen, wenn solche Handschuhe nicht vorhanden sind.

Vorteilhafte Ausführungsformen der Erfindung sind auch in den abhängigen Ansprüchen, der Beschreibung und den Figuren angegeben.

In einigen Ausführungsformen der erfindungsgemäßen Spanauffangvorrichtung weist die thermische Isolierung des Auffangbehältnisses eine Wärmeleitfähigkeit von weniger als 1,0 W/(m K), insbesondere von weniger 0,2 W/(m K), auf. Dies kann mit leicht verfügbaren und kostengünstigen festen Materialien erreicht werden, aber auch durch die Verwendung von mit Gas gefüllten oder evakuierten Volumina.

Derartige Werte für die Wärmeleitfähigkeit sind jedoch nicht zwingend. Je nach konkreter Ausgestaltung der Spanauffangvorrichtung kann eine thermische Isolierung ausreichend sein, deren Wärmeleitfähigkeit größer ist als 1,0 W/(m K).

In einigen Ausführungsformen der Spanauffangvorrichtung ist das Auffangbehältnis mehrwandig ausgebildet und die thermische Isolierung zwischen einer Innenwand und einer Außenwand des Auffangbehältnisses vorgesehen. Das hat den Vorteil, dass die thermische Isolierung durch die Innenwand und die Außenwand geschützt sein kann. Ferner ist vorteilhaft, dass die Innenwand und die Außenwand hinsichtlich anderer, nicht der thermischen Isolierung dienender Eigenschaften optimiert werden kann, z. B. der Stabilität oder Handhabbarkeit.

In einigen Ausführungsformen der Spanauffangvorrichtung ist die thermische Isolierung des mehrwandigen Auffangbehältnisses durch zumindest ein Volumen zwischen der Innenwand und der Außenwand gebildet, wobei das Volumen ein Fluid, insbesondere ein Gas, ist. Die Wärmeleitfähigkeit von Gasen bei beispielsweise einem Druck von 1,0 bar ist in den meisten Fällen eine Größenordnung kleiner als 0,2 W/(m K). Alternativ ist das Volumen in einigen Ausführungsformen evakuiert, worunter ein Volumen verstanden wird, in dem ein Druck von beispielsweise weniger als 0,2 bar herrscht. Insbesondere kann das Vakuum in dem Volumen gemäß der üblichen Definition ein Grobvakuum (mehr als etwa 1 mbar) oder ein Feinvakuum (zwischen 10⁻³ mbar und 1 mbar) sein. Es ist auch möglich, dass das Vakuum in dem Volumen ein Hochvakuum (zwischen 10⁻³ mbar und 10⁻⁸ mbar) ist.

Auf diese Weise kann sich die Erfindung das Konzept z. B. isolierender Trinkgefä-ße zunutze machen. Die Verwendung von Gasen oder eines Vakuums kann für eine besonders gute thermische Isolierung sorgen, die auf bekannte Konzepte zurückgreift und so besonders wirtschaftlich realisiert werden kann.

Das die thermische Isolierung bildende Volumen zwischen Innenwand und Außenwand muss kein Fluid sein. Es ist auch möglich, als thermische Isolierung ein festes Material oder mehrere unterschiedliche feste Materialien zu verwenden. Beispielsweise kann die thermische Isolierung von Mineralwolle, z.B. Steinwolle oder Glaswolle, oder Perlit-Material gebildet sein. Auch andere feste Materialien, mit denen eine jeweils gewünschte thermische Isolationswirkung erzielt werden kann, kommen in Frage.

In einigen Ausführungsformen der Spanauffangvorrichtung wird die thermische Isolierung von einer Wand des Auffangbehältnisses gebildet. Ein solches Behältnis kann besonders einfach hergestellt werden. Die Innenseite der Wand kann mit einer Schutzbeschichtung versehen sein und/oder der Wand kann innenseitig eine Schutzwand vorgelagert sein. Alternativ oder zusätzlich kann die Außenseite der Wand mit einer Schutzbeschichtung versehen sein und/oder der Wand kann außenseitig eine Schutzwand vorgelagert sein. Das kann beispielsweise für eine thermische Isolierung vorteilhaft sein, deren Innenseite gegen die Hitzeeinwirkung heißer Späne oder gegen die mechanischen Einwirkungen der auftreffenden Späne geschützt werden soll. Ein äußerer Schutz kann ein diesbezüglich empfindliches Material, das für die thermische Isolierung verwendet wird, vor mechanischer Beanspruchung schützen, alternativ oder zusätzlich in haptischer oder ästhetischer Hinsicht vorteilhaft sein.

Unabhängig davon, ob die thermische Isolierung zwischen zwei Wänden vorgesehen oder von einer Wand gebildet ist, kann die Außenseite des Auffangbehältnisses eine oder mehrere zusätzliche Schichten aufweisen. Eine solche Außenschicht, die auch als Außenhaut bezeichnet werden kann, kann z.B. aus einem Kunststoff bestehen, wobei dies aber nicht zwingend ist. Die Wirkung einer oder mehrerer solcher Schichten kann vielfältig und z.B. in haptischer oder ästhetischer Hinsicht vorteilhaft sein. Die Schicht oder Schichten kann bzw. können aber auch den Wärmeschutz für den Benutzer verbessern. Wenn z.B. eine Außenwand des Auffangbehältnisses aus Metall besteht, kann die Außenwand mit einer Kunststoff-Außenhaut versehen sein, um einen direkten Kontakt des Benutzers mit einer Metalloberfläche zu vermeiden. Dies kann auch dann von besonderem Vorteil sein, wenn die thermische Isolierung zwischen der Außenwand und einer Innenwand vorgesehen und z.B. von einem evakuierten Volumen gebildet ist. Die Außenhaut der Außenwand kann dann einen zusätzlichen Schutz für den Benutzer bilden, so dass die Außenwand z.B. aus Metall bestehen und die thermische Isolierung so gewählt werden kann, dass sie eine geringere Isolierungswirkung erbringen muss als es ohne die zusätzliche Außenhaut erforderlich wäre.

In einigen Ausführungsformen kann vorgesehen sein, dass das Auffangbehältnis einen starren Behälter umfasst oder ein starrer Behälter ist. Hierbei ist von Vorteil, dass das Auffangbehältnis unabhängig von der Menge und/oder der Temperatur aufgefangener Späne formstabil bleibt und zudem ausreichend robust und langlebig ist. Der Behälter kann nichtmagnetische und/oder nichtmagnetisierbare Materialien umfassen. Das hat den Vorteil, dass Späne aus magnetisierbarem und/oder magnetischem Material nicht innen am Behälter haften, der somit einfacher entleert werden kann. Der Behälter kann aus Metall hergestellt sein, z. B. aus rostfreiem Stahl oder Aluminium. Hierdurch kann der Behälter bei relativ geringem Gewicht ein hohes Maß an Formstabilität aufweisen.

In einigen Ausführungsformen ist zwischen Auffangbehältnis und Kopplungsvorrichtung zumindest ein im Bereich eines offenen Endes des Auffangbehältnisses gelegener, umlaufender Spalt und/oder zumindest ein im Bereich eines Eingriffs zwischen Auffangbehältnis und Kopplungsvorrichtung gelegener, umlaufender Isolierspalt vorgesehen. Dies kann aus thermischen Gründen vorteilhaft sein. Insbesondere kann hierdurch ein das Auffangbehältnis umgebender Abschnitt der Kopplungsvorrichtung vor der Hitzeeinwirkung der im Auffangbehältnis vorhandenen heißen Späne geschützt werden. Besonders vorteilhaft kann dies für einen Bereich sein, an dem die Kopplungsvorrichtung und das Auffangbehältnis miteinander in Eingriff stehen, z. B. durch eine Schraubverbindung.

In einigen Ausführungsformen sind die Kopplungsvorrichtung und das Auffangbehältnis der Spanauffangvorrichtung durch eine Schraub-, Steck- oder Bajonettverbindung miteinander gekoppelt. Hierdurch können die Kopplungsvorrichtung und das Behältnis schnell und einfach miteinander verbunden und voneinander getrennt werden.

In einigen Ausführungsformen ist die Kopplungsvorrichtung der Spanauffangvorrichtung als abgewinkeltes Rohrstück ausgebildet, das einen werkzeugseitigen Rohrabschnitt und einen behältnisseitigen Rohrabschnitt aufweist, die unter einem Winkel zwischen 90 Grad und 180 Grad zueinander verlaufen. Hierdurch kann eine Anpassung an die Geometrie des jeweiligen Elektrowerkzeugs z. B. dahingehend erreicht werden, dass das Auffangbehältnis eher anliegend als abstehend angeordnet ist. Zudem kann durch die abgewinkelte Gestalt sichergestellt werden, dass aufgefangene Späne nicht einfach zurückfallen.

In einigen Ausführungsformen weist die Kopplungsvorrichtung und/oder das Auffangbehältnis der Spanauffangvorrichtung zumindest eine Entlüftungsöffnung auf. Durch eine solche Entlüftungsöffnung kann aufgestaute Luft nach außen ausströmen.

Vorzugsweise ist die Entlüftungsöffnung im Bereich eines offenen Endes des Auffangbehältnisses angeordnet. Insbesondere kann die Entlüftungsöffnung in der Kopplungsvorrichtung ausgebildet sein, und zwar in einem dem offenen Ende des Auffangbehältnisses vorgelagerten Bereich.

In manchen Ausführungsformen kann vorgesehen sein, dass der Entlüftungsöffnung ein, bevorzugt als separates Bauteil ausgebildeter, Filter zugeordnet ist. Der Filter hält Späne und/oder Staub zurück, die sonst mit dem Luftstrom durch die Entlüftungsöffnung herausgetragen würden. Der Filter kann ein Grobfilter oder ein Feinfilter sein. Alternativ kann auch ein Satz unterschiedlicher auswechselbarer Filter vorgesehen sein. Es kann daher vorteilhaft sein, den Filter als separates Bauteil vorzusehen. Der Filter kann an der Kopplungsvorrichtung angebracht sein. Hierdurch kann die Kopplungsvorrichtung gleichzeitig als Träger für den Filter genutzt werden.

In einigen Ausführungsformen ist der Entlüftungsöffnung der Kopplungsvorrichtung innenseitig eine Prallwand vorgelagert, um während des Betriebs vom Spanaustritt des Elektrowerkzeugs eintreffende Späne in Richtung des Auffangbehältnisses abprallen zu lassen. Hierdurch kann erreicht werden, dass die Entlüftungsöffnung von Spänen freigehalten wird und die Späne zuverlässig in das Innere des Auffangbehältnisses gelangen. Besonders vorteilhaft ist dies dann, wenn die Entlüftungsöffnung im Bereich eines offenen Endes des Auffangbehältnisses angeordnet ist. Insbesondere ist die Prallwand mit der Kopplungsvorrichtung verbunden, bevorzugt einstückig. Bei einstückiger Ausbildung ist vorteilhaft, dass eine Montage entfällt. Bei separater Ausbildung der Prallwand kann diese auswechselbar sein.

In einigen Ausführungsformen ist der Entlüftungsöffnung außenseitig eine Leitwand zur Luftstromumleitung nachgelagert. Das hat den Vorteil, dass der durch die Entlüftungsöffnung austretende, gegebenenfalls heiße, Luftstrom vom Elektrowerkzeug weggeleitet wird, sodass der Benutzer keine Verbrennungen oder unangenehmen Störungen erleidet. Die Leitwand ist insbesondere an der Außenseite der Kopplungsvorrichtung stromabwärts der Entlüftungsöffnung angebracht.

Die Erfindung betrifft zudem die Verwendung eines Behältnisses, insbesondere in Form eines starren Behälters, das eine thermische Isolierung aufweist, die das Innere des Behältnisses von dessen Außenseite thermisch trennt, zum Auffangen von heißen Spänen, die bei der spanenden Bearbeitung von Werkstücken aus Metall- oder Steinmaterial mittels Elektrowerkzeugen entstehen, wobei während des Betriebs das Behältnis mit einem Spanaustritt des Elektrowerkzeugs lösbar gekoppelt ist. Bei den Elektrowerkzeugen handelt es sich insbesondere um handgeführte und/oder semistationäre und/oder stationäre Elektrowerkzeuge, wie an anderer Stelle erwähnt.

Die Erfindung wird im Folgenden beispielhaft unter Bezugnahme auf die Figuren beschrieben. Es zeigen:
- Fig. 1: schematisch eine Handkreissäge, die durch einen Spanaustritt mit einer erfindungsgemäßen, hier ebenfalls schematisch dargestellten Spanauffangvorrichtung verbunden ist,
- Fig. 2: ein Ausführungsbeispiel einer erfindungsgemäßen Spanauffangvorrichtung, (a) in perspektivischer Darstellung und (b) in Seitenansicht, und
- Fig. 3: das Ausführungsbeispiel von Fig. 2, (a) in Ansicht von unten und (b) in Schnittdarstellung.

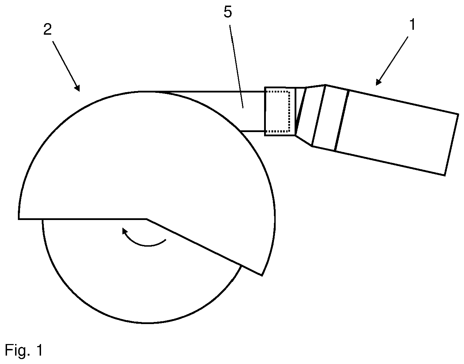

Die in Fig. 1 dargestellte Handkreissäge 2 ist mit einem üblichen Spanaustritt 5 versehen, über welchen sie mit einer erfindungsgemäßen Spanauffangvorrichtung 1 verbunden ist, die nachstehend anhand eines möglichen Ausführungsbeispiels näher beschrieben wird. Die Handkreissäge 2 ist hier lediglich beispielhaft für ein Elektrowerkzeug mit Spanaustritt 5 gezeigt.

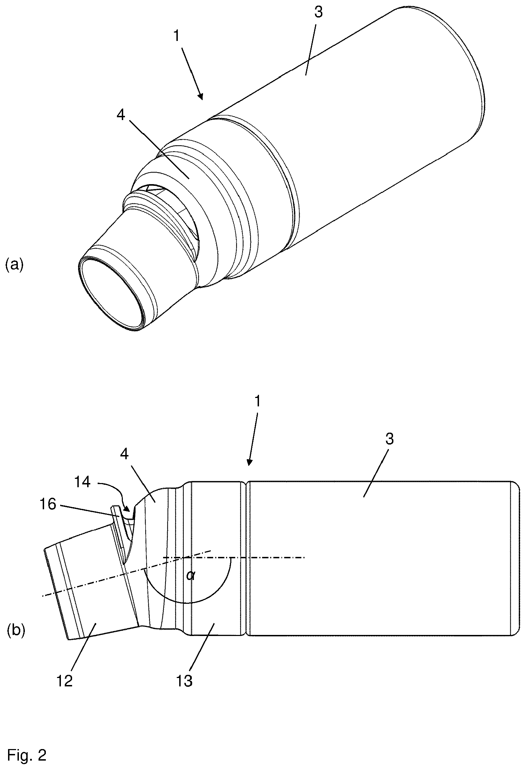

Die Spanauffangvorrichtung 1 weist ein thermisch isoliertes Auffangbehältnis 3 und eine damit lösbar verbundene, abgewinkelte Kopplungsvorrichtung 4 auf, wie in Fig. 2a dargestellt. Die Kopplungsvorrichtung 4 besitzt einen werkzeugseitigen Rohrabschnitt 12 und einen behältnisseitigen Rohrabschnitt 13, die unter einem Winkel *α* zueinander verlaufen, wie in Fig. 2b gezeigt. Der werkzeugseitige Rohrabschnitt 12 läuft zum offenen Ende hin leicht konisch zu, um mit herkömmlichen Spanaustritten 5 von Elektrowerkzeugen 2 kompatibel zu sein. Die Kopplungsvorrichtung 4 ist mit einer Entlüftungsöffnung 14 und einer nach Art eines Wulstes ausgebildeten Leitwand 16 versehen, worauf nachstehend näher eingegangen wird.

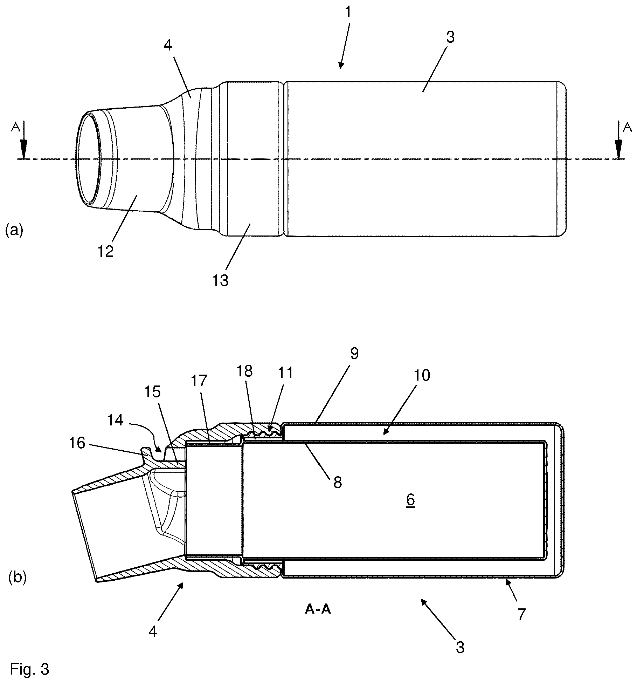

Gemäß Fig. 3b (Schnitt entlang der Ebene A-A in Fig. 3a) grenzen außen die Leitwand 16 und innen eine Prallwand 15 an die Entlüftungsöffnung 14 an. Leitwand 16 und Prallwand 14 sind hier in die Kopplungsvorrichtung 4 integriert, um die Herstellung separater Bauteile zu vermeiden und die Montage zu vereinfachen, können aber auch als separate Bauteile ausgeführt sein. Das erfindungsgemäße Auffangbehältnis 3 ist hier ein starrer, zylindrischer Behälter mit einer Innenwand 8 und einer Außenwand 9, kann alternativ aber auch flexibel und/oder quader- oder kastenförmig sein.

Die thermische Isolierung des Auffangbehältnisses 3 wird durch ein evakuiertes Volumen 10 gebildet, das das Innere 6 von der Außenseite 7 des Auffangbehältnisses 3 thermisch trennt. Das Auffangbehältnis 6 kann beispielsweise aus rostfreiem Stahl bestehen, um sowohl temperatur- als auch korrosionsbeständig zu sein. Das Auffangbehältnis 6 kann alternativ auch aus Aluminium bestehen, um zudem leicht und nicht magnetisierbar zu sein.

Das Auffangbehältnis 3 ist durch eine Schraubverbindung 11 mit der Kopplungsvorrichtung 4 lösbar verbunden. Auffangbehältnis 3 und Kopplungsvorrichtung 4 können alternativ auch durch eine Steck- oder Bajonettverbindung lösbar gekoppelt sein. Zwischen einem im offenen Ende des Auffangbehältnisses 3 mündenden Endabschnitt des Auffangbehältnisses 3 und der Kopplungsvorrichtung 4 ist ein umlaufender Spalt 17 vorhanden, d. h. in diesem dem Eingriffsbereich für die Schraubverbindung 11 vorgelagerten Bereich ist der Außendurchmesser des Auffangbehältnisses kleiner als der Innendurchmesser der Kopplungsvorrichtung 4, so dass ein den Spalt 17 bildender Zwischenraum entsteht. Zudem besitzt das Auffangbehältnis 3 im Bereich der Schraubverbindung 11, also zwischen Innenwand 8 und Gewindeabschnitt, einen umlaufenden Isolierspalt 18.

Beim Sägen von beispielsweise Metall mit der Handkreissäge 2 (vgl. Fig. 1) werden heiße Späne durch den Spanaustritt 5 in die damit verbundene Spanauffangvorrichtung 1 geleitet. In der Kopplungsvorrichtung 4 werden eintreffende Späne, die ansonsten die Entlüftungsöffnung 14 zusetzen könnten, von der Prallwand 15 in Richtung des Inneren 6 des Auffangbehältnisses 3 weitergeleitet. Durch die abgewinkelte Form der Kopplungsvorrichtung 4 wird erreicht, dass aufgefangene Späne im Auffangbehältnis 3 verbleiben, d. h. es wird zuverlässig verhindert, dass aufgefangene Späne einfach zurückfallen.

Die Prallwand 15 ist durch die auftreffenden, heißen Späne stark beansprucht, weswegen sie auch als separates Bauteil aus einem besonders temperaturbeständigen Material ausgebildet sein kann. Die Prallwand 15 kann alternativ oder zusätzlich auch mit einem temperaturbeständigen Material mit geringer thermischer Leitfähigkeit beschichtet sein.

Aufgefangene heiße Späne erhöhen die Temperatur im Inneren 6 des Auffangbehältnisses 3. Die von dem evakuierten Volumen 10 gebildete thermische Isolierung verhindert, dass sich die Außenseite 7 des Auffangbehältnisses 3 übermäßig erwärmt.

Die durch die Rotation des Sägeblatts der Kreissäge 2 in die Auffangvorrichtung 1 transportierte Luft besitzt aufgrund der bei der Bearbeitung entstehenden Wärme und der mittransportierten heißen Späne eine vergleichsweise hohe Temperatur. Die Luft kann durch die Entlüftungsöffnung 14 der Kopplungsvorrichtung 4 ausströmen, so dass sie sich nicht im Inneren des Behälters 3 aufstaut. Die der Entlüftungsöffnung 14 nachgelagerte Leitwand 16 lenkt den Luftstrom so ab, dass der Benutzer vor der ausströmenden heißen Luft geschützt ist.

Der umlaufende Spalt 17 und der Isolierspalt 18 unterbinden, dass das Kopplungsstück 4 behältnisseitig übermäßig erhitzt wird.

### Bezugszeichenliste

- 1: Spanauffangvorrichtung
- 2: Elektrowerkzeug, Handkreissäge
- 3: Auffangbehältnis
- 4: Kopplungsvorrichtung
- 5: Spanaustritt
- 6: Inneres des Auffangbehältnisses
- 7: Außenseite des Auffangbehältnisses
- 8: Innenwand
- 9: Außenwand
- 10: Thermische Isolierung, evakuiertes Volumen
- 11: Schraubverbindung
- 12: werkzeugseitiger Rohrabschnitt
- 13: behältnisseitiger Rohrabschnitt
- 14: Entlüftungsöffnung
- 15: Prallwand
- 16: Leitwand
- 17: Spalt
- 18: Isolierspalt
- *α*: Winkel

## Patentansprüche

1. Spanauffangvorrichtung (1) für Elektrowerkzeuge (2), insbesondere für handgeführte und/oder semistationäre und/oder stationäre Elektrowerkzeuge,
mit einem Auffangbehältnis (3) und einer damit verbundenen Kopplungsvorrichtung (4) zur lösbaren Kopplung mit einem Spanaustritt (5) eines Elektrowerkzeugs (2),
wobei das Auffangbehältnis (3) eine thermische Isolierung (10) aufweist, durch die zumindest abschnittsweise das Innere (6) des Auffangbehältnisses (3) von dessen Außenseite (7) thermisch getrennt ist.

2. Vorrichtung (1) nach Anspruch 1, wobei das Auffangbehältnis (3) mehrwandig ausgebildet ist und die thermische Isolierung (10) zwischen einer Innenwand (8) und einer Außenwand (9) des Auffangbehältnisses (3) vorgesehen ist.

3. Vorrichtung (1) nach Anspruch 2, wobei die thermische Isolierung durch zumindest ein Volumen (10) zwischen der Innenwand (8) und der Außenwand (9) gebildet ist, wobei das Volumen (10) ein Fluid, insbesondere ein Gas, ist oder wobei das Volumen (10) evakuiert ist.

4. Vorrichtung (1) nach Anspruch 1, wobei die thermische Isolierung von einer Wand des Auffangbehältnisses (3) gebildet ist, insbesondere wobei eine Innenseite und/oder eine Außenseite der Wand mit einer Schutzbeschichtung versehen ist und/oder wobei der Wand innenseitig und/oder außenseitig eine Schutzwand vorgelagert ist.

5. Vorrichtung (1) nach einem der vorhergehenden Ansprüche, wobei das Auffangbehältnis (3) einen starren Behälter umfasst oder ein starrer Behälter ist.

6. Vorrichtung (1) nach einem der vorhergehenden Ansprüche, wobei zwischen Auffangbehältnis (3) und Kopplungsvorrichtung (4) zumindest ein im Bereich eines offenen Endes des Auffangbehältnisses (3) gelegener, umlaufender Spalt (17) und/oder zumindest ein im Bereich eines Eingriffs zwischen Auffangbehältnis (3) und Kopplungsvorrichtung (4) gelegener, umlaufender Isolierspalt (18) vorgesehen ist.

7. Vorrichtung (1) nach einem der vorhergehenden Ansprüche, wobei die Kopplungsvorrichtung (4) durch eine Schraubverbindung (11) oder eine Steckverbindung oder eine Bajonettverbindung mit dem Auffangbehältnis (3) verbunden ist.

8. Vorrichtung (1) nach einem der vorhergehenden Ansprüche, wobei die Kopplungsvorrichtung (4) als abgewinkeltes Rohrstück ausgebildet ist, das einen werkzeugseitigen Rohrabschnitt (12) und einen behältnisseitigen Rohrabschnitt (13) aufweist, wobei die beiden Rohrabschnitte (12, 13) unter einem Winkel (α) zwischen 90 Grad und 180 Grad, insbesondere zwischen 135 Grad und 180 Grad, zueinander verlaufen.

9. Vorrichtung (1) nach einem der vorhergehenden Ansprüche, wobei die thermische Isolierung eine Wärmeleitfähigkeit von weniger als 1,0 W/(m K), vorzugsweise von weniger als 0,2 W/(m K), aufweist.

10. Vorrichtung (1) nach einem der vorhergehenden Ansprüche, wobei die Kopplungsvorrichtung (4) und/oder das Auffangbehältnis (3) zumindest eine Entlüftungsöffnung (14) aufweist.

11. Vorrichtung (1) nach Anspruch 10, wobei der Entlüftungsöffnung (14) ein, bevorzugt als separates Bauteil ausgebildeter, Filter zugeordnet ist, insbesondere wobei der Filter an der Kopplungsvorrichtung (4) angebracht ist.

12. Vorrichtung (1) nach Anspruch 10 oder 11, wobei der Entlüftungsöffnung (14) innenseitig eine Prallwand (15) vorgelagert ist, die derart ausgebildet und angeordnet ist, dass während des Betriebs vom Spanaustritt (5) des Elektrowerkzeugs (2) eintreffende Späne in Richtung des Inneren (6) des Auffangbehältnisses (3) abprallen, insbesondere wobei die Prallwand (15) mit der Kopplungsvorrichtung (4), bevorzugt einstückig, verbunden ist.

13. Vorrichtung (1) nach einem der Ansprüche 10 bis 12, wobei der Entlüftungsöffnung (14) außenseitig eine Leitwand (16) zur Luftstromumleitung nachgelagert ist, insbesondere wobei die Leitwand (16) an der Außenseite (7) der Kopplungsvorrichtung (4) stromabwärts der Entlüftungsöffnung (14) angebracht ist.

14. Verwendung eines Behältnisses (3), insbesondere eines starren Behälters (3), das eine thermische Isolierung (10) aufweist, die das Innere (6) des Behältnisses (3) von dessen Außenseite (7) thermisch trennt,
zum Auffangen von heißen Spänen, die bei der spanenden Bearbeitung von Werkstücken aus Metall- oder Steinmaterial mittels Elektrowerkzeugen (2), insbesondere handgeführten und/oder semistationären und/oder stationären Elektrowerkzeugen (2), entstehen,
wobei während des Betriebs das Behältnis (3) mit einem Spanaustritt (5) des Elektrowerkzeugs (2) gekoppelt ist.

## Geänderte Patentansprüche

### Geänderte Patentansprüche gemäss Regel 137(2) EPÜ.

1. Spanauffangvorrichtung (1) für Elektrowerkzeuge (2), insbesondere für handgeführte und/oder semistationäre und/oder stationäre Elektrowerkzeuge,
mit einem Auffangbehältnis (3) und einer damit verbundenen Kopplungsvorrichtung (4) zur lösbaren Kopplung mit einem Spanaustritt (5) eines Elektrowerkzeugs (2),
wobei das Auffangbehältnis (3) eine thermische Isolierung (10) aufweist, durch die zumindest abschnittsweise das Innere (6) des Auffangbehältnisses (3) von dessen Außenseite (7) thermisch getrennt ist, und
wobei das Auffangbehältnis (3) mehrwandig ausgebildet ist und die thermische Isolierung (10) zwischen einer Innenwand (8) und einer Außenwand (9) des Auffangbehältnisses (3) vorgesehen ist,
**dadurch gekennzeichnet,**
**dass** die thermische Isolierung durch zumindest ein Volumen (10) zwischen der Innenwand (8) und der Außenwand (9) gebildet ist, wobei das Volumen (10) evakuiert ist.

2. Vorrichtung (1) nach Anspruch 1, wobei das Auffangbehältnis (3) einen starren Behälter umfasst oder ein starrer Behälter ist.

3. Vorrichtung (1) nach Anspruch 1 oder 2, wobei zwischen Auffangbehältnis (3) und Kopplungsvorrichtung (4) zumindest ein im Bereich eines offenen Endes des Auffangbehältnisses (3) gelegener, umlaufender Spalt (17) und/oder zumindest ein im Bereich eines Eingriffs zwischen Auffangbehältnis (3) und Kopplungsvorrichtung (4) gelegener, umlaufender Isolierspalt (18) vorgesehen ist.

4. Vorrichtung (1) nach einem der vorhergehenden Ansprüche, wobei die Kopplungsvorrichtung (4) durch eine Schraubverbindung (11) oder eine Steckverbindung oder eine Bajonettverbindung mit dem Auffangbehältnis (3) verbunden ist.

5. Vorrichtung (1) nach einem der vorhergehenden Ansprüche, wobei die Kopplungsvorrichtung (4) als abgewinkeltes Rohrstück ausgebildet ist, das einen werkzeugseitigen Rohrabschnitt (12) und einen behältnisseitigen Rohrabschnitt (13) aufweist, wobei die beiden Rohrabschnitte (12, 13) unter einem Winkel (α) zwischen 90 Grad und 180 Grad, insbesondere zwischen 135 Grad und 180 Grad, zueinander verlaufen.

6. Vorrichtung (1) nach einem der vorhergehenden Ansprüche, wobei die thermische Isolierung eine Wärmeleitfähigkeit von weniger als 1,0 W/(m K), vorzugsweise von weniger als 0,2 W/(m K), aufweist.

7. Vorrichtung (1) nach einem der vorhergehenden Ansprüche, wobei die Kopplungsvorrichtung (4) und/oder das Auffangbehältnis (3) zumindest eine Entlüftungsöffnung (14) aufweist.

8. Vorrichtung (1) nach Anspruch 7, wobei der Entlüftungsöffnung (14) ein, bevorzugt als separates Bauteil ausgebildeter, Filter zugeordnet ist, insbesondere wobei der Filter an der Kopplungsvorrichtung (4) angebracht ist.

9. Vorrichtung (1) nach Anspruch 7 oder 8, wobei der Entlüftungsöffnung (14) innenseitig eine Prallwand (15) vorgelagert ist, die derart ausgebildet und angeordnet ist, dass während des Betriebs vom Spanaustritt (5) des Elektrowerkzeugs (2) eintreffende Späne in Richtung des Inneren (6) des Auffangbehältnisses (3) abprallen, insbesondere wobei die Prallwand (15) mit der Kopplungsvorrichtung (4), bevorzugt einstückig, verbunden ist.

10. Vorrichtung (1) nach einem der Ansprüche 7 bis 9, wobei der Entlüftungsöffnung (14) außenseitig eine Leitwand (16) zur Luftstromumleitung nachgelagert ist, insbesondere wobei die Leitwand (16) an der Außenseite (7) der Kopplungsvorrichtung (4) stromabwärts der Entlüftungsöffnung (14) angebracht ist.

11. Verwendung eines Behältnisses (3), insbesondere eines starren Behälters (3), das eine thermische Isolierung (10) aufweist, die das Innere (6) des Behältnisses (3) von dessen Außenseite (7) thermisch trennt,
zum Auffangen von heißen Spänen, die bei der spanenden Bearbeitung von Werkstücken aus Metall- oder Steinmaterial mittels Elektrowerkzeugen (2), insbesondere handgeführten und/oder semistationären und/oder stationären Elektrowerkzeugen (2), entstehen,
wobei während des Betriebs das Behältnis (3) mit einem Spanaustritt (5) des Elektrowerkzeugs (2) gekoppelt ist,
wobei das Behältnis (3) eine thermische Isolierung (10) aufweist, durch die zumindest abschnittsweise das Innere (6) des Behältnisses (3) von dessen Außenseite (7) thermisch getrennt ist,
wobei das Behältnis (3) mehrwandig ausgebildet ist und die thermische Isolierung (10) zwischen einer Innenwand (8) und einer Außenwand (9) des Behältnisses (3) vorgesehen ist, und
wobei die thermische Isolierung durch zumindest ein Volumen (10) zwischen der Innenwand (8) und der Außenwand (9) gebildet ist, wobei das Volumen (10) evakuiert ist.
